# EUROPEAN PATENT SPECIFICATION

(11) **EP 3 920 132 B1**
(45) Date of publication and mention of the grant of the patent: **04.06.2025**
(21) Application number: 19915272.9
(22) Date of filing: 06.11.2019
(51) Int. Cl.: G06T 7/32, G06T 5/40, G06T 5/94, H04N 23/68, H04N 23/71, H04N 23/741

(54) **ELECTRONIC DEVICE FOR GENERATING HDR IMAGE AND OPERATING METHOD THEREFOR**
ELEKTRONISCHE VORRICHTUNG ZUR ERZEUGUNG EINES HDR-BILDES UND BETRIEBSVERFAHREN DAFÜR
DISPOSITIF ÉLECTRONIQUE PERMETTANT DE GÉNÉRER UNE IMAGE HDR ET SON PROCÉDÉ DE FONCTIONNEMENT

(30) Priority: 15.02.2019 US 201916277630; 04.11.2019 KR 20190139734
(43) Date of publication of application: 08.12.2021
(73) Proprietor: Samsung Electronics Co., Ltd., Suwon-si, Gyeonggi-do 16677 (KR)
(72) Inventor: ZHEN, Ruiwen, Mountain View, California 94043 (US); GLOTZBACH, John, Mountain View, California 94043 (US); PEKKUCUKSEN, Ibrahim, Mountain View, California 94043 (US); SHEIKH, Hamid Rahim, Mountain View, California 94043 (US)
(74) Representative: Walaski, Jan Filip
(86) International application number: PCT/KR2019/014937
(87) International publication number: WO 2020/166791

(56) References cited:
- KR-A- 20150 019 985
- KR-A- 20180 132 210
- KR-B1- 101 698 876
- US-A1- 2015 002 704
- US-A1- 2017 302 838
- HUANG SHU-YI ET AL: "Motion area based exposure fusion algorithm for ghost removal in high dynamic range video generation", SIGNAL AND INFORMATION PROCESSING ASSOCIATION ANNUAL SUMMIT AND CONFERENCE (APSIPA), 2014 ASIA-PACIFIC, ASIA-PACIFIC SIGNAL AND INFORMATION PROCESSING ASS, 9 December 2014 (2014-12-09), pages 1 - 4, XP032736379, DOI: 10.1109/APSIPA.2014.7041597
- MOHANNA Y ET AL: "Digital image stabilization for video images", 2015 27TH INTERNATIONAL CONFERENCE ON MICROELECTRONICS (ICM), IEEE, 20 December 2015 (2015-12-20), pages 59 - 62, XP032885285, DOI: 10.1109/ICM.2015.7437987

## Description

The present disclosure relates to an electronic device for generating a high dynamic range (HDR) image, and an operating method therefor. More particularly, the present disclosure relates to an electronic device for generating an HDR image by composing several images, and an operating method therefor.

A natural scene often has a high dynamic range (HDR) that exceeds a capturing range of common digital cameras. A digital photograph of the natural scene may not provide sufficient details in an under-exposed or over-exposed region.

Accordingly, there is a need for a method of generating an HDR image from images captured in different exposure degrees, the HDR image providing sufficient details even in an under-exposed or over-exposed region of a digital photograph.

The HDR image may be generated when several static still images are blended, but when there is movement of an object between the still images, a ghost artifact may be generated in the HDR image due to the movement of the object.

Also, when the several static still images are blended, a saturation region may be generated as pixel values of the still images are added to each other.

Huang Shu-Yi et al: "Motion area based exposure fusion algorithm for ghost removal in high dynamic range video generation", SIGNAL AND INFORMATION PROCESSING ASSOCIATION ANNUAL SUMMIT AND CONFERENCE (APSIPA), 9 December 2014, pages 1 - 4, XP032736379, discloses a method to generate a deghosting HDR video based on exposure fusion scheme.

According to aspects of the invention, there is provided a method of generating a high dynamic range image as set out in claim 1, an electronic device as set out in claim 7, and a computer-readable recording medium as set out in claim 13.

Provided are an electronic device for generating a high dynamic range (HDR) image, and an operating method therefor.

Also, provided is a computer-readable recording medium having recorded thereon a program for executing the method on a computer. The technical problems to be solved are not limited to those described above, and other technical problems may be present.

### BRIEF DESCRIPTION OF DRAWINGS

FIG. 1 is a block diagram for describing an example of generating a high dynamic range (HDR) image, according to an embodiment.
FIG. 2 is a block diagram for describing an internal configuration of an electronic device, according to an embodiment.
FIG. 3 is a block diagram for describing an internal configuration of an electronic device, according to an embodiment.
FIG. 4 is a flowchart of a method of generating an HDR image, according to an embodiment.
FIG. 5 is a diagram showing examples of images of different exposures, according to an embodiment.
FIG. 6 is a block diagram for describing a method of matching feature points, according to an embodiment.
FIG. 7 is a diagram showing examples of global feature points and local feature points, according to an embodiment.
FIG. 8 is a block diagram for describing a method of generating a blending map, according to an embodiment.
FIG. 9 is a diagram showing an example of an exposure difference, according to an embodiment.
FIG. 10 is a diagram showing an example of a movement difference, according to an embodiment.
FIG. 11 is a diagram showing an example of blending images of different exposures, according to an image pyramid method, according to an embodiment.
FIG. 12 is a block diagram for describing a method of blending a plurality of images, based on a blending map, according to an embodiment.
FIG. 13 is a diagram showing an example of a blended image, according to an embodiment.

### MODE OF DISCLOSURE

According to an embodiment of the present disclosure, a method of generating a high dynamic range (HDR) image, includes: obtaining a plurality of image captured in different exposure degrees; generating at least one transformation matrix indicating regions corresponding between the plurality of images; determining a movement degree for each of the regions corresponding between the plurality of images, based on the transformation matrix; generating a blending map indicating a blending ratio of the plurality of images in each pixel, based on the determined movement degree; and generating the HDR image by blending the plurality of images, based on the blending map.

According to another embodiment of the disclosure, an electronic device for generating a high dynamic range (HDR) image, includes: a camera configured to obtain a plurality of image captured in different exposure degrees; at least one processor configured to: generate at least one transformation matrix indicating regions corresponding between the plurality of images; determine a movement degree for each of the regions corresponding between the plurality of images, based on the transformation matrix; generate a blending map indicating a blending ratio of the plurality of images in each pixel, based on the determined movement degree; and generate the HDR image by blending the plurality of images, based on the blending map; and a memory storing the generated HDR image.

According to another embodiment of the disclosure, a computer-readable recording medium had recorded thereon a program for implementing the method.

Hereinafter, embodiments of the present disclosure will be described in detail with reference to the accompanying drawings such that one of ordinary skill in the art may easily implement the present disclosure. However, the present disclosure may be implemented in various different forms and is not limited to embodiments described herein. Also, in the drawings, parts irrelevant to the description are omitted in order to clearly describe the present disclosure, and like reference numerals designate like elements throughout the specification.

Throughout the specification, when a part is "connected" to another part, the part may not only be "directly connected" to the other part, but may also be "electrically connected" to the other part with another element in between. In addition, when a part "includes" a certain element, the part may further include another element instead of excluding the other element, unless otherwise stated.

Hereinafter, the present disclosure will be described with reference to accompanying drawings.

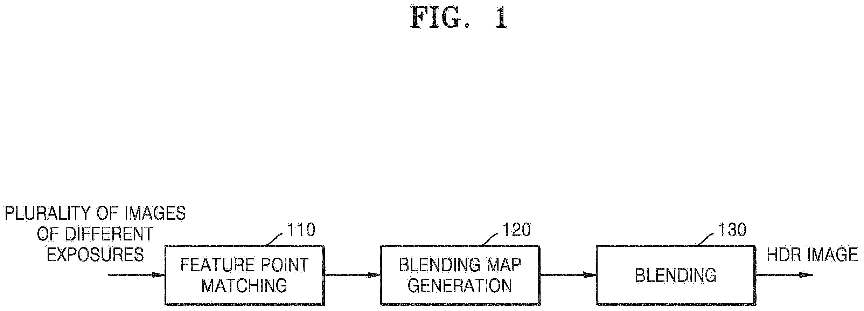

FIG. 1 is a block diagram for describing an example of generating a high dynamic range (HDR) image, according to an embodiment.

The HDR image according to an embodiment may be generated as a plurality of images that are static are matched. The plurality of images according to an embodiment may be still images captured in different exposures.

Referring to FIG. 1, the HDR image according to an embodiment may be generated as the plurality of images captured in different exposures are sequentially processed via feature point matching 110, blending map generation 120, and blending 130.

When a subject of an image moves while the plurality of images are captured according to an embodiment, a ghost artifact may be generated in each image due to an afterimage of the subject included in the image. According to an embodiment, the blending map generation 120 may be performed such that a ghost artifact of the HDR image is reduced.

Also, according to an embodiment, when still images are blended during the blending 130, a halo artifact may be generated due to generation of a saturation region. According to an embodiment, the blending 130 may be performed such that a halo artifact of the HDR image is reduced.

According to the feature point matching 110 according to an embodiment, feature points corresponding between the plurality of images may be matched. For example, a global feature point corresponding to a feature of an image, such as a line, a corner, or the like, included in the entire image, may be extracted. For example, the global feature point may be an oriented features from accelerated and segments tests (FAST) and rotated binary robust independent elementary features (BRIEF) (ORB) feature point, but is not limited thereto and may include various types of feature points indicating a feature of an image.

According to an embodiment, a local feature point extracted based on the global feature point is additionally extracted. According to an embodiment, the blending map generation 120 and the blending 130 may be performed based on results of matching the global feature point and local feature points.

According to an embodiment, after the global feature points are matched with each other between the images, a block search may be performed with a radius set based on the global feature point of each image. Also, according to the block search, the local feature points are additionally extracted and are matched between the images. A local feature point matched to an outlier location from among the local feature points extracted according to an embodiment may be determined as corresponding to noise caused by movement of an object in the image, and may be excluded from a feature point for determining a transformation matrix afterwards. According to an embodiment, the transformation matrix indicating pixels corresponding between the plurality of images may be determined, based on matching of the global feature points and the local feature points remained after outliers are excluded. Thus, according to the transformation matrix generated according to an embodiment, consistency of corresponding image regions may be maintained when the local feature point matched to the outlier location is excluded.

According to the blending map generation 120 according to an embodiment, a ratio of blending the plurality of images may be determined for each of pixels matched between the images, according to the transformation matrix.

A blending map according to an embodiment may include weight values applicable to the plurality of images for each pixel. According to an embodiment, the HDR image may be generated when the pixel values of the images to which different weight values are applied are added according to the blending map during the blending 130.

The blending map according to an embodiment may be determined based on a deghosting map indicating a blending ratio determined based on a movement degree of the object in the image, and a well-exposed map indicating a blending ratio determined based on pixel intensity. For example, in each pixel, the blending map may be determined according to a value obtained by simply multiplying the blending ratios determined according to the deghosting map and the well-exposed map.

The deghosting map according to an embodiment may indicate the blending ratio determined based on the movement degree of the object for each pixel. According to an embodiment, one reference image and at least one non-reference image may be determined for the plurality of images, and the movement degree for each region may be determined by comparing the reference image and the non-reference image. The movement degree according to an embodiment may be determined for each tile including a plurality of pixels. The blending ratio of the deghosting map according to an embodiment may be determined such that a degree of the non-reference image being blended while generating the HDR image is decreased as the movement degree is increased.

The well-exposed map according to an embodiment may be determined based on an intensity value determined for each pixel. The intensity value according to an embodiment may be determined to be a value of 0 or 1, based on a pixel value of each pixel. According to an embodiment, the intensity value may be determined for the pixels of the plurality of images, or the blending ratio may be determined depending on whether the intensity value of pixels matching each other is close to 0.5. For example, the blending ratio of the pixel having the intensity value closest to 0.5 from among the matching pixels of the images may be determined to be the highest.

According to the blending 130 according to an embodiment, the HDR image may be generated when the plurality of images are blended according to the weight value determined for each pixel of each image determined according to the blending map.

According to an embodiment, the plurality of images may be blended stepwise, according to the weight values by the blending map. During primary blending according to an embodiment, weight values W1 and 1-W1 for a non-reference image may be applied respectively to the non-reference image and a reference image to be blended. Also, during secondary blending, weight values W3 and 1-W3 for another non-reference image may be applied respectively to the other non-reference image and the primary blended image to be blended.

According to an embodiment, blending may be performed based on features about details of a non-reference image being blended, in a current step, based on the features about the details of the non-reference image. For example, a number of pyramid levels indicating a number of reference image and non-reference images being decomposed into different resolutions for blending may be determined, and the reference image and the non-reference images may be decomposed into different resolutions by the determined number of pyramid levels, thereby performing the blending.

The blending according to an embodiment may be performed as the weight value according to the blending map is applied to each image in each layer generated when the image is decomposed into different resolutions. In the blending according to an embodiment, the HDR image in which the details of the non-reference image are reflected as much as possible and the halo artifact is reduced may be generated as the number of reference image and non-reference images being decomposed into the different resolutions is determined such that an optimum HDR image may be generated, based on the features of the non-reference image combined to the reference image.

Operations, such as tone mapping, noise filtering, and edge enhancement, may be further performed on the HDR image in which the plurality of images are blended according to the blending 130 according to an embodiment. However, the present disclosure is not limited thereto, and various types of operations for optimizing the HDR image may be further performed on the HDR image where the blending 130 is completed.

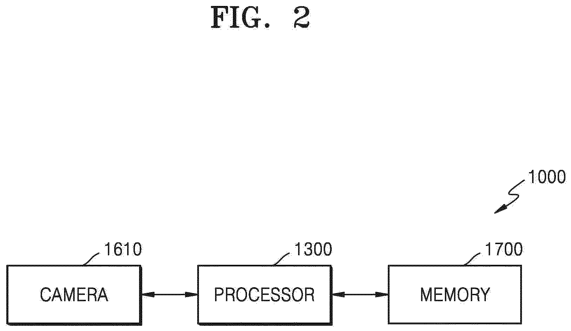

FIG. 2 is a block diagram for describing an internal configuration of an electronic device 1000, according to an embodiment.

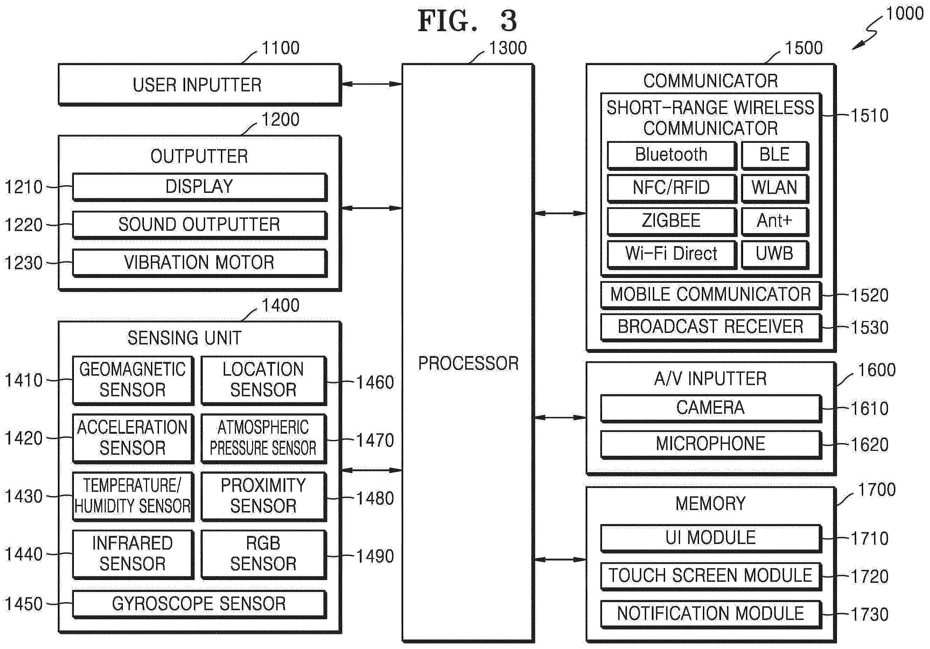

FIG. 3 is a block diagram for describing an internal configuration of the electronic device 1000, according to an embodiment.

The electronic device 1000 according to an embodiment may be embodied in various forms. For example, the electronic apparatus 1000 described herein may be a digital camera, a smart phone, a laptop computer, a tablet personal computer (PC), an electronic book terminal, a digital broadcast terminal, a personal digital assistant (PDA), a portable multimedia player (PMP), a navigation device, an MP3 player, a video phone, an electronic book reader, a desktop PC, a work station, a medical device, a camera, or a smart home appliance (for example, a television (TV), a refrigerator, an air conditioner, a cleaner, or a setup box), but is not limited thereto.

Also, the electronic apparatus 1000 described herein may be a wearable device of the user. Examples of the wearable device include at least one of an accessory type device (for example, a watch, a ring, a wrist band, an ankle band, a necklace, glasses, or a contact lens), a head-mounted device (HMD), a textile or apparel integrated device (for example, electronic clothing), a body-attachable device (for example, a skin pad), or a bio-implant type device (for example, an implantable circuit), but are not limited thereto. Hereinafter, for convenience of description, an example in which the electronic device 1000 is a smart phone will be described.

Referring to FIG. 2, the electronic device 1000 may include a camera 1610, a processor 1300, and a memory 1700. However, the components shown in FIG. 2 are not all essential components of the electronic device 1000. The electronic device 1000 may include more or fewer components than those shown in FIG. 2.

For example, as shown in FIG. 3, the electronic device 1000 according to some embodiments may further include, in addition to the camera 1610, the processor 1300, and the memory 1700, a user inputter 1100, an outputter 1200, a sensing unit 1400, a communicator 1500, and an audio/video (A/V) inputter 1600.

The user inputter 1100 is a unit into which data for a user to control the electronic device 1000 is input. For example, the user inputter 1100 may include a key pad, a dome switch, a touch pad (contact capacitance type, pressure resistive type, an infrared (IR) detection type, surface ultrasonic wave conduction type, integral tension measuring type, piezo-effect type, or the like), a jog wheel, a jog switch, or the like, but is not limited thereto.

According to an embodiment, the user inputter 1100 may receive a user input for generating an HDR image. For example, a plurality of still images may be captured and the HDR image may be generated from the plurality of still images, based on the user input received by the user inputter 1100.

The outputter 1200 may output an audio signal, a video signal, or a vibration signal, and the outputter 1200 may include a display 1210, a sound outputter 1220, and a vibration motor 1230.

The display 1210 displays information processed by the electronic device 1000. According to an embodiment, the display 1210 may display the HDR image generated from the plurality of images.

When the display 1210 is configured as a touch screen by forming a layer structure with a touch pad, the display 1210 may be used as an input device as well as an output device. The display 1210 may include at least one of a liquid crystal display, a thin-film transistor-liquid crystal display, an organic light-emitting diode, a flexible display, a 3-dimensional (3D) display, or an electrophoretic display. Also, according to an embodiment of the electronic device 1000, the electronic device 1000 may include two or more displays 1210.

The sound outputter 1220 outputs audio data received from the communicator 1500 or stored in the memory 1700. A vibration motor 1230 may output a vibration signal. Also, the vibration motor 1230 may output a vibration signal when a touch is input on the touch screen.

The sound outputter 1220 and vibration motor 1230 according to an embodiment may be used to output information related to the HDR image generated according to an embodiment. For example, the sound outputter 1220 and vibration motor 1230 may output information related to the HDR image displayed on the display 1210.

The processor 1300 generally controls all operations of the electronic device 1000. For example, the processor 1300 may execute programs stored in the memory 1700 to control the user inputter 1100, the outputter 1200, the sensing unit 1400, the communicator 1500, and the A/V inputter 1600 in general.

The electronic device 1000 may include at least one processor 1300. For example, the electronic device 1000 may include various types of processors, such as a central processing unit (CPU), a graphics processing unit (GPU), and a neural processing unit (NPU).

The processor 1300 may be configured to process a command of a computer program by performing basic arithmetic, logic, and input/output operations. The command may be provided from the memory 1700 to the processor 1300 or may be provided to the processor 1300 by being received via the communicator 1500. For example, the processor 1300 may be configured to execute the command according to a program code stored in a recording device such as the memory (1700).

The processor 1300 according to an embodiment detects global feature points and local feature points from a plurality of images captured in different exposures, and matches the global feature points and local feature points between the plurality of images. Also, the processor 1300 generates a transformation matrix indicating regions corresponding between the plurality of images, based on a result of the matching.

The processor 1300 according to an embodiment may determine a movement degree of each image by comparing the regions corresponding between the plurality of images, based on the transformation matrix, and generate a blending map based on the movement degree. The blending map according to an embodiment may be generated by determining a weight value to be applied to a pixel of each image, according to the movement degree.

The HDR image may be generated by blending the plurality of images, based on the blending map generated according to an embodiment. The processor 1300 according to an embodiment may blend the plurality of images stepwise, based on the weight value determined according to the blending map. According to an embodiment, in a current step, as the blending is performed based on features about details of a non-reference image blended with a reference image, the HDR image in which the details of the non-reference image is reflected as much as possible and a halo artifact is reduced may be generated.

For example, a blending between reference image and a first non-reference image may be performed first, based on a weight value of the first non-reference image. Also, a blending between an image obtained by blending the reference image and the first non-reference image and a second non-reference image may be performed, based on a weight value of the second non-reference image.

The sensing unit 1400 may detect a state of the electronic device 1000 or a state around the electronic device 1000 and transmit detected information to the processor 1300.

The sensing unit 1400 may include at least one of a geomagnetic sensor 1410, an acceleration sensor 1420, a temperature/humidity sensor 1430, an infrared sensor 1440, a gyroscope sensor 1450, a location sensor 1460 (for example, a global positioning system (GPS)), an atmospheric pressure sensor 1470, a proximity sensor 1480, or a red, green, blue (RBG) sensor 1490 (illumination sensor), but is not limited thereto.

According to an embodiment, the HDR image may be generated based on the information detected by the sensing unit 1400. For example, the HDR image may be generated based on an image captured by the RBG sensor 1490 of the sensing unit 1400.

The communicator 1500 may include one or more components enabling the electronic device 1000 to communicate with a server or an external device (not shown). For example, the communicator 1500 may include a short-range wireless communicator 1510, a mobile communicator 1520, and a broadcast receiver 1530.

The short-range wireless communicator 1510 may include a Bluetooth communicator, a Bluetooth low energy (BLE) communicator, a near field communicator, a wireless local area network (WLAN) (Wi-Fi) communicator, a Zigbee communicator, an infrared data association (IrDA) communicator, a Wi-Fi direct (WFD) communicator, an ultra-wideband (UWB) communicator, or an Ant+ communicator, but is not limited thereto.

The mobile communicator 1520 may transmit or receive a wireless signal to or from at least one of a base station, an external terminal, or a server, on a mobile communication network. Here, the wireless signal may include various types of data according to exchange of a voice call signal, an image call signal, or a text/multimedia message.

The broadcast receiver 1530 may receive a broadcast signal and/or information related to a broadcast from an external source through a broadcast channel. The broadcast channel may include a satellite channel or a terrestrial channel. According to an implementation example, the electronic device 1000 may not include the broadcast receiver 1530.

The communicator 1500 according to an embodiment may receive information required to generate the HDR image. For example, the communicator 1500 may receive, from an external source, the plurality of images for generating the HDR image.

The A/V inputter 1600 is a unit into which an audio signal or a video signal is input, and may include the camera 1610 and a microphone 1620. The camera 1610 may obtain an image frame such as a still image or moving image via an image sensor in an image call mode or photographing mode. An image captured via the image sensor may be processed via the processor 1300 or a separate image processor (not shown).

The microphone 1620 receives an external sound signal and processes the external sound signal to electric voice data.

The HDR image may be generated based on the plurality of images captured by the A/V inputter 1600 according to an embodiment.

The memory 1700 may store programs for processes and controls by the processor 1300 and may store data input to or output from the electronic device 1000.

The memory 1700 according to an embodiment may store data required to generate the HDR image. For example, the memory 1700 may store the plurality of images for generating the HDR image. Also, the memory 1700 may store the HDR image generated according to an embodiment.

The memory 1700 may include at least one type of storage medium among a flash memory type, a hard disk type, a multimedia card micro type, a card type memory (for example, a secure digital (SD) or an extreme digital (XD) memory), a random access memory (RAM), a static RAM (SRAM), a read-only memory (ROM), an electrically erasable programmable ROM (EEPROM), a programmable ROM (PROM), a magnetic memory, a magnetic disk, or an optical disk.

Programs stored in the memory 1700 may be classified into a plurality of modules based on functions, and for example, may be classified into a user interface (UI) module 1710, a touch screen module 1720, and a notification module 1730.

The UI module 1710 may provide a specialized UI or graphics user interface (GUI), which interoperates with the electronic device 1000 for each application. The touch screen module 1720 may detect a touch gesture of the user on a touch screen and transmit information about the touch gesture to the processor 1300. The touch screen module 1720 according to some embodiments may recognize and analyze a touch code. The touch screen module 1720 may be configured as separate hardware including a controller.

Various sensors may be provided inside or near the touch screen so as to sense a touch or proximity touch on the touch screen. An example of the sensor for sensing the touch on the touch screen include a tactile sensor. The tactile sensor is a sensor that senses a contact of a certain object to a degree or greater that is felt by a person. The tactile sensor may sense various types of information, such as roughness of a contact surface, rigidity of a contact object, and a temperature of a contact point.

The touch gesture of the user may include tap, touch and hold, double tap, drag, panning, flick, drag and drop, swipe and the like.

The notification module 1730 may generate a signal for notifying event occurrence of the electronic device 1000.

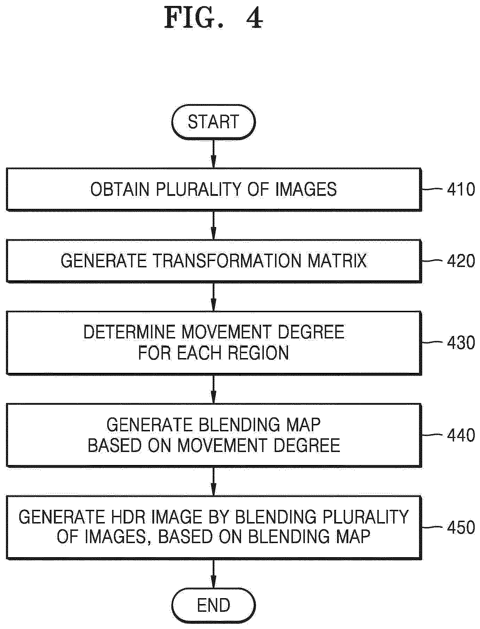

FIG. 4 is a flowchart of a method of generating an HDR image, according to an embodiment.

Referring to FIG. 4, in operation 410, the electronic device 1000 may obtain a plurality of images captured in different exposures. For example, the electronic device 1000 may obtain the plurality of images by capturing the images in different exposure settings, by using a camera included in the electronic device 1000. According to an embodiment, the electronic device 1000 may obtain the plurality of images by receiving the plurality of images captured in different exposures from the outside.

In operation 420, the electronic device 1000 may generate a transformation matrix indicating regions corresponding between the plurality of images. The transformation matrix according to an embodiment is generated based on a result of matching global feature points and local feature points extracted from the plurality of images.

According to an embodiment, the global feature points are detected from the plurality of images, and feature points corresponding between the global feature points detected from each of the plurality of images are matched to each other.

The global feature point according to an embodiment may be a point indicating a feature region of the image, and may be, for example, an ORB feature point. The global feature point is not limited thereto, and may be various types of feature points capable of indicating the feature region of the image throughout the image. According to an embodiment, after the global feature point is detected from each image, the global feature points corresponding between the images may be matched.

The result of matching the global feature points, according to an embodiment, is represented as the transformation matrix capable of indicating regions corresponding between two images. However, the result of matching the global feature points is not limited thereto, and may be represented in various methods indicating the regions corresponding between the plurality of images.

In operation 430, the electronic device 1000 additionally detects the local feature points, based on the global feature points detected in operation 420. According to an embodiment, the electronic device 1000 detects the local feature points of the plurality of images by performing a block search, based on the result of matching the global feature points. The detected local feature points are matched with each other between the plurality of images.

According to an embodiment, one of the plurality of images may be determined as a reference image. For example, an image having an intermediate exposure from among the plurality of images may be determined as the reference image. The reference image may be split into a plurality of blocks, and center points of the blocks are determined as the local feature points.

The electronic device 1000 according to an embodiment may perform the block search to search for blocks of a non-reference image respectively corresponding to the blocks of the reference image. The block search according to an embodiment may be performed according to a sum of absolute difference (SAD) method for searching for a block by using a sum of differences between the block of the reference image and the block of the non-reference image.

According to an embodiment, based on the result of matching the global feature points, a region of the non-reference image to be determined whether it corresponds to any one of the blocks of the reference image may be determined. For example, a region of the non-reference image where the block search is to be performed may be determined based on the region of the non-reference image corresponding to a block region of the reference image, based on the transformation matrix generated according to the result of matching the global feature points.

According to an embodiment, the region of the non-reference image where the block search is to be performed may be determined according to a similarity between two images, which may be determined according to a normalized cross correlation (NCC) method. For example, the region where the block search is to be performed may be determined according to the similarity between two images, which is determined according to the NCC method, from the region of the non-reference image, which corresponds to the block region of the reference image and is indicated by the transformation matrix generated according to the result of matching the global feature points.

According to an embodiment, a center point of the block of the non-reference image, which corresponds to the block of the reference image, may be detected as the local feature point, according to a result of performing the block search. The local feature point may be matched to a local feature point of the block of the reference image.

However, an embodiment is not limited thereto, and the electronic device 1000 may detect the local feature points via various methods for performing the block search, based on the result of matching the global feature points, and match the local feature points between the plurality of images.

According to an embodiment, a local feature point without consistency from among the local feature points may be excluded without being used to generate the transformation matrix. For example, unlike a result of matching of the adjacent local feature points, the local feature point where movement of an object has occurred is matched to the local feature point that is relatively far, and thus a result of matching may not be consistent. The electronic device 1000 according to an embodiment may generate a blending map based on the global feature points and the local feature point remaining after the local feature points without consistency is excluded.

Thus, according to an embodiment, consistency of matched image regions may be maintained in the transformation matrix as the local feature point where the movement of the object has occurred is excluded.

In operation 430, the electronic device 1000 may determine a movement degree for each region corresponding between the images, based on the transformation matrix generated in operation 420. Also, in operation 440, the electronic device 1000 may generate the blending map based on the movement degree.

The blending map according to an embodiment may include a weight value between 0 and 1 indicating a ratio of blending the plurality of images, for each pixel. According to an embodiment, weight values of the blending map that is finally obtained may be determined such that the sum of weight values of the images for one pixel is 1. For example, an HDR image based on the plurality of images may be generated by applying the weight values to the pixels of the plurality of images, according to the blending map.

The blending map according to an embodiment may be obtained according to a deghosting map determined based on the movement degree, and a well-exposed map determined based on pixel intensity.

The deghosting map according to an embodiment may be generated as the weight value to be applied to each image is determined based on the movement degree determined according to an image difference between the reference image and the non-reference image, for each pixel. For example, the deghosting map may be generated by determining a blending ratio indicating a degree to which the pixel of the non-reference image compared to the reference image is reflected in the HDR image based on the movement degree.

The image difference according to an embodiment may be generated by an exposure, noise, and movement of an object. According to an embodiment, the blending ratio may be determined in a region where the image difference is generated by at least one of exposure or noise, such that details of the non-reference image may be significantly reflected. Meanwhile, in a region where the image difference is generated by the movement of the object, the non-reference image may include a ghost artifact, and thus the blending ratio of the non-reference image may be determined to be low.

The well-exposed map according to an embodiment may be generated based on the blending ratio determined according to intensity of each pixel. For example, when the pixel intensity that may have a value between 0 and 1 is closer to 0.5, the blending ratio having a greater value may be determined, because the region may include more details.

The blending map according to an embodiment may be generated when a weight value determined according to the deghosting map and a weight value determined according to the well-exposed map are simply multiplied. However, an embodiment is not limited thereto, and the blending map may be generated via various methods based on the deghosting map and the well-exposed map.

In operation 450, the electronic device 1000 may generate the HDR image by blending the plurality of images, based on the blending map determined in operation 440. The blending map according to an embodiment may include the weight values that may be applied for each pixel included in the plurality of images.

The non-reference image among the plurality of images blended according to an embodiment may be an image where pixels of a region including movement of an object determined while generating the blending map are replaced by pixels of the reference image.

According to an embodiment, the plurality of images may be blended stepwise. For example, the blending may be performed a plurality of times by the number of non-reference images, according to a condition set according to features of the non-reference images blended with the reference image. Thus, according to an embodiment, the HDR image in which generation of a halo artifact is reduced and details included in the non-reference image are reflected as much as possible may be generated.

For example, a blending between the reference image and a first non-reference image may be performed first, based on a weight value of the first non-reference image. Also, a blending between an image obtained by blending the reference image and the first non-reference image and a second non-reference image may be performed, based on a weight value of the second non-reference image.

Tone mapping, noise filtering, and edge enhancement may be further performed on an image in which the plurality of images are blended, based on the blending map according to an embodiment. However, an embodiment is not limited thereto, and various operations for image optimization may be performed on the HDR image.

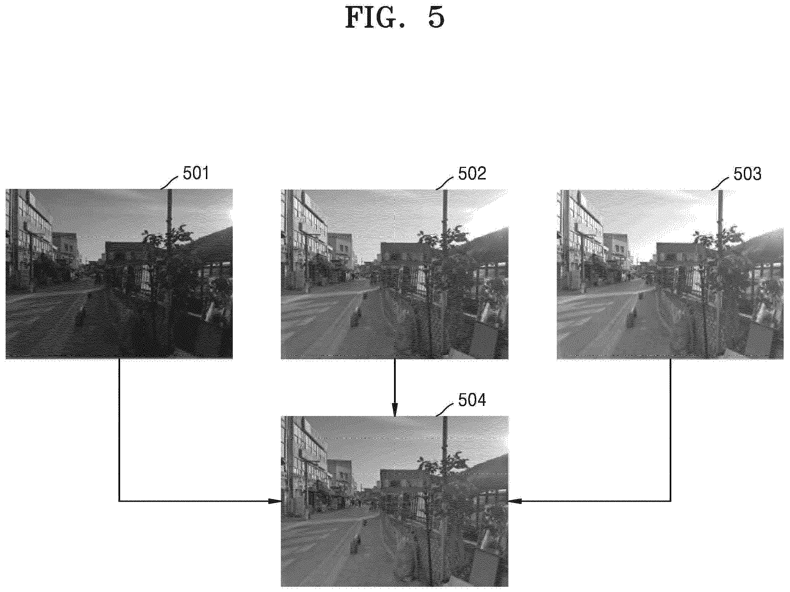

FIG. 5 is a diagram showing examples of images of different exposures, according to an embodiment.

Referring to FIG. 5, an HDR image 504 according to an embodiment may be generated based on a plurality of images 501, 502, and 503 of different exposures. The plurality of images 501, 502, and 503 according to an embodiment may include a short-exposure image 501, a medium-exposure image 502, and a long-exposure image 503 according to the exposures. Exposure differences between the images may be uniform or different, but are not limited thereto, and images of various exposure differences may be used for HDR image generation.

The plurality of images 501, 502, and 503 of different exposures according to an embodiment may be images captured sequentially by one camera. Alternatively, the plurality of images 501, 502, and 503 of different exposures may be images captured by using a plurality of different cameras.

Among the plurality of images 501, 502, and 503 according to an embodiment, an image that is highly likely to include relatively more details may be set as a reference image and remaining images may be set as non-reference images. According to an embodiment, the medium-exposure image 502 includes most details, and thus may be set as the reference image.

According to an embodiment, an HDR image may be generated based on three or more images. Also, a medium-exposure image among the three or more images may be set as a reference image to generate the HDR image.

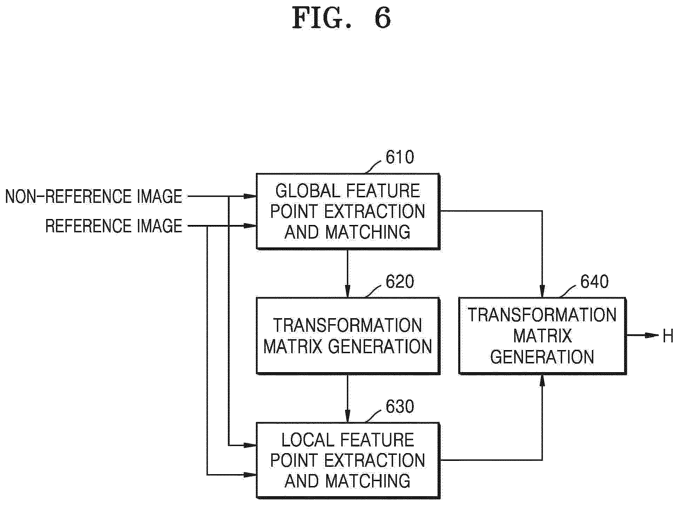

FIG. 6 is a block diagram for describing a method of matching feature points, according to an embodiment.

Referring to FIG. 6, a transformation matrix between a non-reference image and a reference image may be obtained via feature point matching. The transformation matrix according to an embodiment may include regions corresponding between images. For example, when the reference image is the medium-exposure image 502, a transformation matrix between the reference image and the short-exposure image 501 and a transformation matrix between the reference image and a long-exposure image 503 may be obtained.

A feature point according to an embodiment includes a global matching point and a local feature point, and the local feature point is a feature point that may be extracted from an image, based on the global matching point.

During global feature point extraction and matching 610, the electronic device 1000 may extract global feature points by comparing the non-reference image and the reference image, and match the global feature points corresponding between the images. The global feature point according to an embodiment may include various types of feature points indicating features of an image.

During transformation matrix generation 620, the electronic device 1000 may generate the transformation matrix between the non-reference image and the reference image, according to a result of matching the global feature points. The transformation matrix according to an embodiment may indicate regions corresponding between the non-reference image and the reference image, determined according to the result of matching the global feature points.

During local feature point extraction and matching 630, the electronic device 1000 may extract local feature points from the non-reference image and the reference image, based on the transformation matrix generated according to the result of matching the global feature points, and match the local feature points. The local feature point of the reference image according to an embodiment may be determined to be a center point of each block generated by splitting the reference image into a plurality of blocks.

The local feature point of the reference image according to an embodiment may be matched to the local feature point of the non-reference image via a block search performed on the non-reference image. According to an embodiment, the electronic device 1000 may search for a block of the non-reference image, which correspond to the block of the local feature point of the reference image, via the block search. Also, the electronic device 1000 extracts a center point of a found block of the reference image as the local feature point matching the local feature point of the reference image. The block search according to an embodiment may be performed on a region of the non-reference image, which corresponds to the block of the reference image determined according to the transformation matrix.

During transformation matrix generation 640, the electronic device 1000 may generate a transformation matrix H between the reference image and the non-reference image, based on matching of the global feature points and local feature points.

Among the local feature points according to an embodiment, a local feature point that is inconsistent unlike a result of matching of the adjacent local feature points may be excluded from transformation matrix generation. For example, when a location of a matched local feature point is obtained to be a relatively far from a location where a local feature point of a background is matched, due to movement of an object, the matched local feature point may be excluded.

The transformation matrix according to an embodiment may be generated for each non-reference image. For example, the transformation matrix between the reference image and the short-exposure image 501, and the transformation matrix between the reference image and the long-exposure image 503 may be generated.

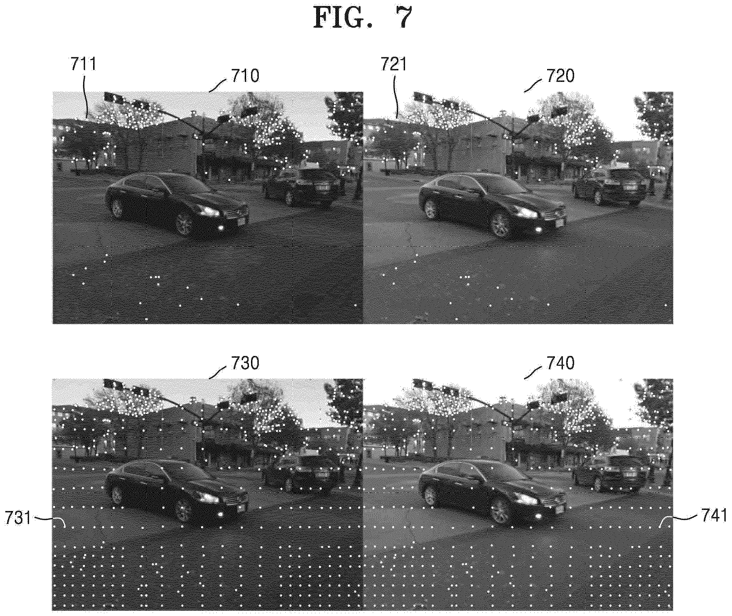

FIG. 7 is a diagram showing examples of global feature points and local feature points, according to an embodiment.

Reference numerals 710 and 720 of FIG. 7 illustrate global feature points 711 and 721 of a reference image and non-reference image, respectively, and reference numerals 730 and 740 illustrate together global feature points and local feature points 731 and 741 of a reference image and non-reference image, respectively.

Referring to the global feature points 711 and 721 shown in the reference numerals 710 and 720, global feature points cover only partial regions of images. Thus, many errors may occur in a transformation matrix generated only by global feature points. However, the local feature points 731 and 741 shown in the reference numerals 730 and 740 may cover most regions of images, unlike global feature points. Thus, a transformation matrix based on local feature points and global feature point may have less errors than a transformation matrix generated by only using global feature points.

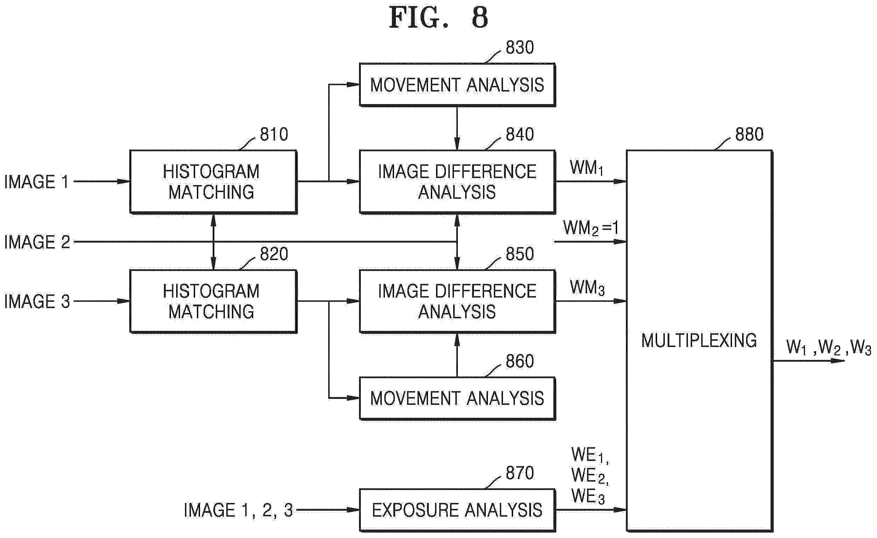

FIG. 8 is a block diagram for describing a method of generating a blending map, according to an embodiment.

Referring to FIG. 8, the blending map may be generated based on a deghosting map and a well-exposed map.

The blending map according to an embodiment may include weight values W₁, W₂, and W₃ between 0 and 1, which may be applied for each pixel of an image. According to an embodiment, the weight values W₁, W₂, and W₃ may be generated for images 1, 2, and 3, with respect to each pixel. Here, the weight values W₁, W₂, and W₃ may be generated such that the sum of the weight values W₁, W₂, and W₃ is 1.

Also, the deghosting map and the well-exposed map, according to an embodiment, may include weight values applicable to each pixel of an image, like the blending map. For example, weight values WM₁, WM₂, and WM₃ to be applied to the images 1, 2, and 3 for each pixel may be generated for the deghosting map. Similarly, weight values WE₁, WE₂, and WE₃ to be applied to the images 1, 2, and 3 for each pixel may be generated for the well-exposed map.

The deghosting map according to an embodiment may be generated via histogram matchings 810 and 820, movement analyses 830 and 860, and image difference analyses 840 and 850.

During the histogram matchings 810 and 820 according to an embodiment, the electronic device 1000 may match histograms between a reference image (image 2) and non-reference images (images 1 and 3). According to histogram matching according to an embodiment, brightness and feelings of colors between two images may be matched as color distributions of the images are adjusted to match each other.

According to an embodiment, after the histograms of two images are matched, the movement analyses 830 and 860 and image difference analysis 840 and 850 may be performed.

A movement degree of an object between two images may be determined according to the movement analyses 830 and 860 according to an embodiment. Also, during the image difference analyses 840 and 850, a blending ratio of the reference image (image 2) to the non-reference image (images 1 and 3) may be determined based on the movement degree.

Thus, according to an embodiment, the pixel values of the images are blended according to the well-exposed map, while a degree of blending the non-reference image may be reduced in a partial region where movement has occurred, according to the deghosting map.

According to an embodiment, the movement analyses 830 and 860 may be performed according to tiles of the images. Accordingly, a blending ratio different from a region without movement may be determined for the partial region with movement.

According to an embodiment, regions corresponding between two images, where the movement degrees are determined, may be identified according to transformation matrixes obtained according to the feature point matching 110.

The movement degree according to an embodiment may be determined as movement of an object between two images is detected. For example, the movement degree may be determined according to an SAD technique for determining movement of a corresponding block determined via a block search. However, an embodiment is not limited thereto, and the movement degree according to an embodiment may be determined according to various methods for motion detection between two images.

The blending ratio determined according to the image difference analyses 840 and 850 according to an embodiment may be determined in inverse proportion to the movement degree. For example, the blending ratio of the non-reference image (image 1 or 3) may be determined to be low in a region where the movement degree between two images is high.

Thus, according to an embodiment, the blending ratio of the non-reference image (image 1 or 3) may be determined to have a low value in the region where the movement degree is high, from among image regions where a difference has occurred between the two images. On the other hand, the blending ratio of the non-reference image (image 1 or 3) may be determined to have a high value in a region where the movement degree is low but an exposure difference or noise difference is high, from among the image regions where the difference has occurred between the two images.

According to an embodiment, so as to prevent a movement degree of a texture region of an image from being determined to be a high value due to an exposure difference, despite that there is no movement, the movement degree may be determined after a smoothing filter is applied to the region.

According to an embodiment, the blending ratios WM₁ and WM₃ of the non-reference images determined via the image difference analyses 840 and 850 may be determined for each pixel, according to the movement degree, based on a case where the blending ratio WM₂ of the reference image is 1. According to an embodiment, the deghosting map including the blending ratios determined for each pixel of the non-reference image may be generated.

During an exposure analysis 870 according to an embodiment, the weight values WE₁, WE₂, and WE₃ based on intensity values of the images 1 to 3 may be determined for each pixel. The intensity value of each pixel according to an embodiment may be determined to be a value of 0 or 1. Intensity of a pixel may be determined, for example, according to a luminance value of a pixel value. For example, the intensity of the pixel may be determined to be a value close to 0 when the luminance value is close to 0. An embodiment is not limited thereto, and various values indicating the intensity of the pixel value may be determined according to various methods.

According to an embodiment, among pixels corresponding between the images, a pixel having intermediate intensity may be determined to include a detail. Thus, the weight values according to an embodiment may be determined to be a high value depending on whether the intensity value of the pixel is close to 0.5.

Also, according to an embodiment, the weight value may be determined depending on where the intensity value of each pixel is located on a Gaussian curve. For example, an x-axis of a center of the Gaussian curve may be determined to be an intensity value 0.5, and a y-axis thereof may be determined to be a weight value 1 , and as intensity values of pixels are arranged on the Gaussian curve, a weight value to be applied to each pixel may be determined.

According to an embodiment, pixels corresponding between a plurality of images where weight values are determined may be identified according to transformation matrixes obtained according to the feature point matching 110. According to an embodiment, the well-exposed map may be generated as the weight values to be applied to the pixels are determined according to the intensity values of the pixels of the plurality of images identified according to the transformation matrixes.

According to an embodiment, the weight values W₁, W₂, and W₃ of the well-exposed map may be determined such that the sum of the weight values determined for one pixel is 1 (W₁+W₂+W₃=1).

During multiplexing 880 according to an embodiment, the blending map may be generated based on the deghosting map and the well-exposed map.

According to an embodiment, the multiplexing 880 may be performed on WM₁, WM₂, and WM₃, and WE₁, WE₂, and WE₃, and thus the blending map including W₁, W₂, and W₃ for each pixel may be generated. For example, W₁ may be obtained based on a value obtained via simple multiplication of WM₁ and WE₁. Similarly, W₂ and W₃ may be obtained based on a value obtained via simple multiplication of WM₂ and WE₂, and a value obtained via simple multiplication of WM₃ and WE₃. According to an embodiment, values of W₁, W₂, and W₃ may be adjusted such that the sum of obtained W₁, W₂, and W₃ is 1.

According to an embodiment, the blending 130 may be performed on a region of the non-reference image determined to be a region where movement has occurred after the region is replaced with a pixel value of the reference image, according to the deghosting map. For example, a pixel value of a region of the non-reference image, where the movement degree is equal to or greater than a reference value, may be replaced with a pixel value of the reference image corresponding to the region.

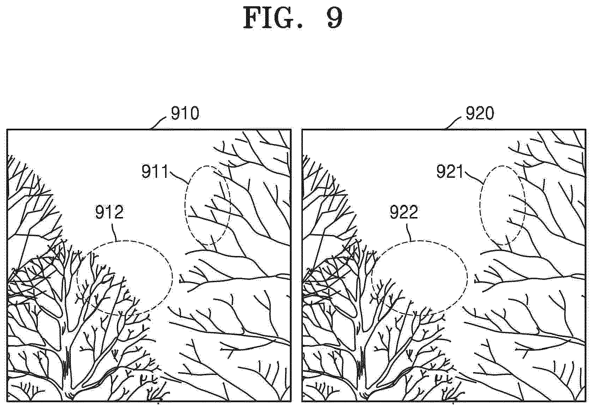

FIG. 9 is a diagram showing an example of an exposure difference, according to an embodiment.

Referring to FIG. 9, an exposure difference may be identified from images 910 and 920 of different exposures. For example, some of leaves and branches displayed in a region 911 may not be displayed in a region 921 due to an exposure difference. Also, some of leaves and branches displayed in a region 912 may not be displayed in a region 922 due to an exposure difference.

According to an embodiment, weight values of pixel values of regions 911 and 912 may be determined to be higher values, according to a well-exposed map. Also, a weight value of the well-exposed map may not be adjusted by a deghosting map, as movement does not occur in the regions 911 and 912.

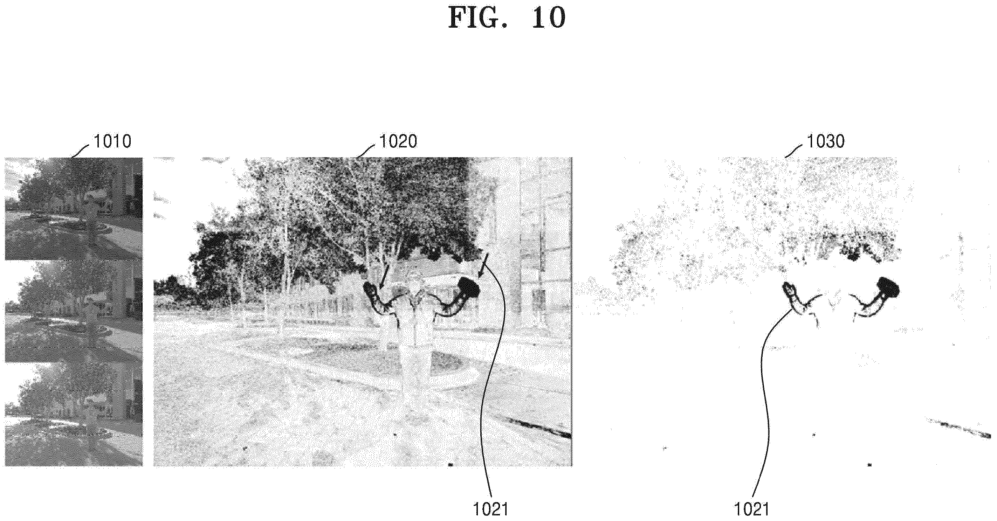

FIG. 10 is a diagram showing an example of a movement difference, according to an embodiment.

Referring to FIG. 10, reference numerals 1020 and 103 denote deghosting maps for non-reference images, among a plurality of images 1010 of different exposures. Unlike the deghosting map 1020, the deghosting map 1030 is processed such that an image difference caused by an exposure difference is not recognized as movement. In a deghosting map, a region closer to 0 may be displayed darker.

According to the deghosting maps 1020 and 1030 according to an embodiment, as shown in FIG. 10, a low blending ratio may be determined for a region 1021 indicated by an arrow where movement has occurred, because a movement degree is determined to be high.

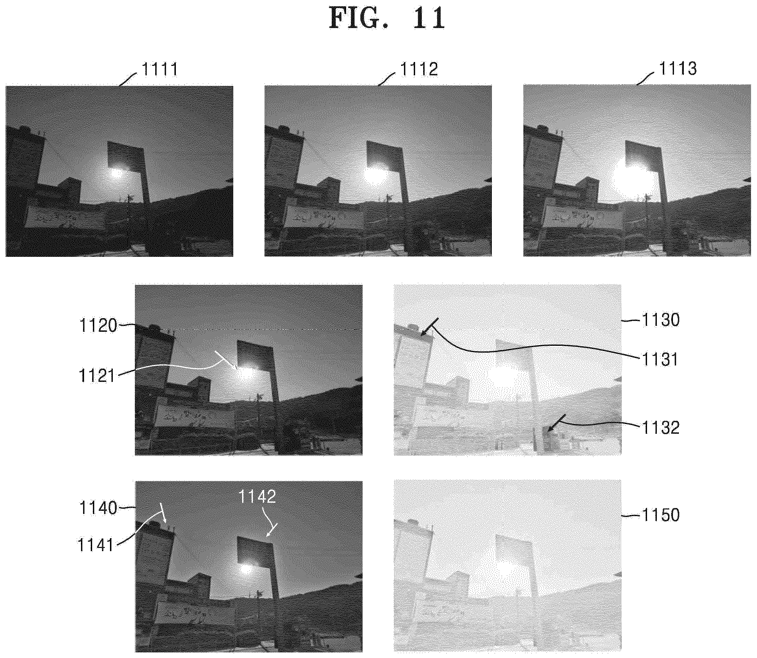

FIG. 11 is a diagram showing an example of blending images 1111 through 1113 of different exposures, according to an image pyramid method, according to an embodiment.

The plurality of images 1111 through 1113 according to an embodiment may be blended according to an image pyramid method, according to weight values determined according to a blending map. Among the plurality of images 1111 through 1113 being blended according to an embodiment, a non-reference image may be an image in which pixel values of some regions of the non-reference image have been replaced with pixel values of a reference image, according to a movement degree.

According to the image pyramid method according to an embodiment, a Gaussian pyramid may be generated when the blending map of each image is down-sampled to different resolutions for each layer. Also, a Laplacian pyramid may be generated for each image.

The Laplacian pyramid according to an embodiment may be generated from the Gaussian pyramid. For example, a Laplacian pyramid image in an n level may be determined to be a differential image between a Gaussian pyramid image of the n level and a Gaussian pyramid image of an n-1 level.

According to an embodiment, images generated according to the Laplacian pyramid may be blended in each layer as weight values according to the blending map generated according to the Gaussian pyramid are applied. The images blended in each layer may be blended again after resolutions thereof are adjusted, and thus an HDR image may be generated.

According to a pyramid method of blending a plurality of images according to a blending map, according to an embodiment, noise, such as contour or seam, may be reduced, but a halo artifact may be generated or details of a non-reference image being blended may be lost.

For example, when the number of layers is low, a halo artifact may be generated in an HDR image, and when the number of layers is high, details included in an image being blended may not be sufficiently included in the HDR image, and may be lost.

In FIG. 11, a reference numeral 1120 denotes an example of an HDR image blended according to a pyramid of 11-level, and a reference numeral 1140 denotes an example of an HDR image blended according to a pyramid of 8-level. Reference numerals 1130 and 1150 denote images before being blended according to a pyramid method, and examples of images including details lost in the reference numerals 1120 and 1140, respectively.

Referring to the reference numeral 1120, image details may be lost due to generation of a saturation region in a region 1121, when a number of layers is high. Also, details 1131 and 1132 in the reference numeral 1130 may not be reflected in the reference numeral 1120.

Referring to the reference numeral 1140, halo artifacts may be generated in regions 1141 and 1142 when a number of layers is low.

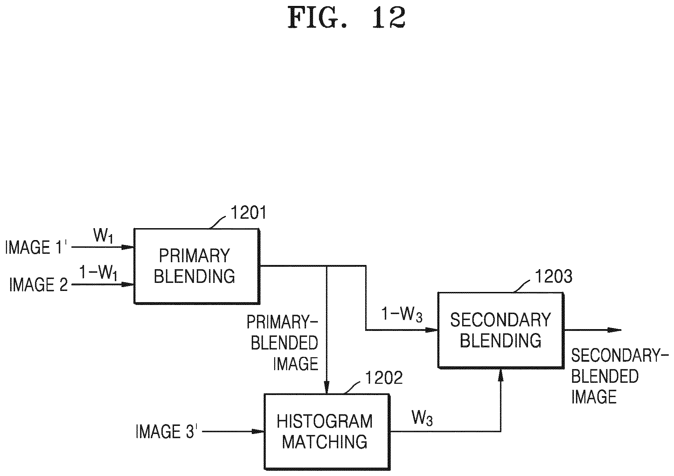

FIG. 12 is a block diagram for describing a method of blending a plurality of images, based on a blending map, according to an embodiment.

Referring to FIG. 12, an image 1' and an image 3', on which blending is performed, may be images in which pixel values of images 1 and 3 are replaced with pixel values of a reference image (image 2), according to a movement degree. However, an embodiment is not limited thereto, and the images 1' and 3' may be images in which pixel values are not replaced according to the movement degree.

According to an embodiment, a plurality of images are not blended at once, but may be blended stepwise according to primary blending 1201 and secondary blending 1203.

During the primary blending 1201 according to an embodiment, a reference image (image 2) and the image 1' that is one of non-reference images may be blended. W₁ determined according to a blending map may be applied to the image 1' and 1-W₁ may be applied to the reference image.

The image 1' that is primary-blended according to an embodiment may be a short-exposure image including details of a saturation region of the reference image, by including a dark region compared to the reference image. Also, the image 3' that is secondary-blended according to an embodiment may be a long-exposure image including details of a dark region of the reference image, by including a bright region compared to the reference image.

According to an embodiment, blending may be performed according to a pyramid level determined according to features about details of the non-reference images blended with the reference image, in each step. The pyramid level according to an embodiment may be determined to be a value such that a halo artifact is reduced and the details of the non-reference images are reflected to an HDR image as much as possible, according to the features about the details of the non-reference images.

For example, according to the primary blending 1201, blending may be performed according to a pyramid of a level (for example, a relatively high level) in which a saturation region and halo artifact are reduced, and details of a short-exposure image may be sufficiently reflected, as the short-exposure image is blended. Also, blending may be performed after at least one of W₁ or 1-W₁, which is a weight value of the blending map, is adjusted such that the saturation region and halo artifact are reduced and the details of the short-exposure image are sufficiently reflected, according to the pyramid of the level.

Also, according to the secondary blending 1203, blending may be performed according to a pyramid of a level (for example, a relatively low level, alpha blending) in which details of a long-exposure image are sufficiently reflected, as the long-exposure image is blended.

Thus, according to an embodiment, blending is performed according to pyramid levels determined suitably based on images to be blended, and thus the HDR image in which noise is reduced and the details of non-reference images are reflected as much as possible may be generated.

During the primary blending 1201 according to an embodiment, the image 1' and the image 2 may be blended based on W₁ and 1-W₁, which are blending maps of the images, according to a pyramid method above. For example, the primary-blended image may be generated as Gaussian pyramids for W₁ and 1-W₁ are applied respectively to Laplacian pyramids for the image 1' and image 2. An embodiment is not limited thereto, and during the primary blending 1201, the image 1' and the image 2 may be blended based on the blending map, according to various methods.

During histogram matching 1202 according to an embodiment, a histogram of the image 3' may be adjusted such that histograms of the primary-blended image and the image 3' are matched. During the histogram matching 1202 according to an embodiment, when the histogram of the image 3' that is a short-exposure image is adjusted, the number of pyramid levels required during the secondary blending 1203 may be reduced as intensity of the image 3' is increased.

During the secondary blending 1203 according to an embodiment, the primary-blended image and the image 3' may be blended. W₃ determined according to the blending map may be applied to the image 3', and 1-W₃ may be applied to the primary-blended image.

During the secondary blending 1203 according to an embodiment, the primary-blended image and the image 3' may be blended based on 1-W₃ and W₃, which are blending maps of the images, according to the pyramid method described above. For example, a secondary-blended image may be generated as Gaussian pyramids for 1-W₃ and W₃ are applied respectively to Laplacian pyramids for the primary-blended image and the image 3'. An embodiment is not limited thereto, and during the secondary blending 1203, the primary-blended image and the image 3' may be blended based on the blending map, according to various methods.

According to an embodiment, the HDR image may be obtained from the secondary-blended image. For example, the HDR image may be obtained by further performing operations, such as tone mapping, noise filtering, and edge enhancement, on the secondary-blended image, for image optimization. An embodiment is not limited thereto, and the HDR image may be finally obtained by further performing, on the secondary-blended image, various types of operations for optimizing an image.

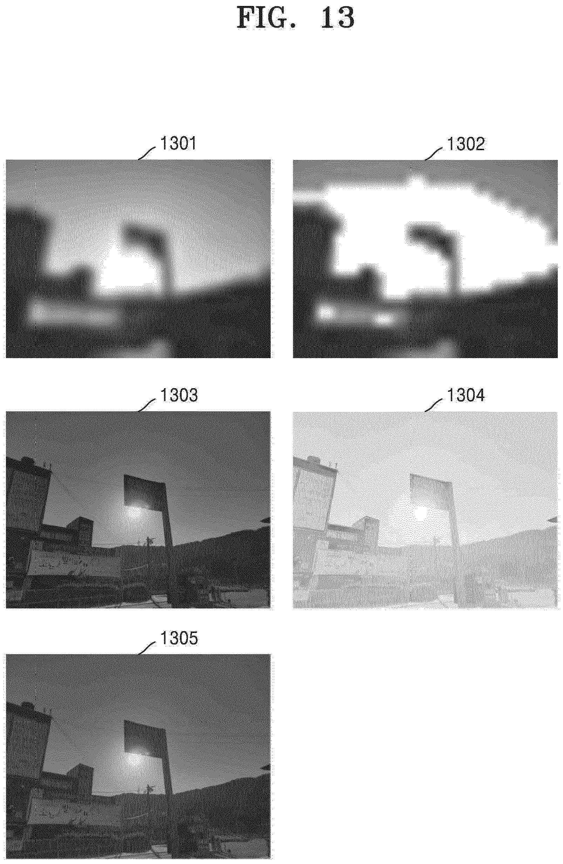

FIG. 13 is a diagram showing an example of a blended image, according to an embodiment.

A reference numeral 1301 of FIG. 13 denotes an example of a blending map in a pyramid level 8 for a short-exposure image (image 3'), and a reference numeral 1302 denotes an example of a blending map in which a weight value is controlled in the pyramid level 8 for the short-exposure image (image 3'). According to an embodiment, blending may be performed according to the blending map in which the weight value is controlled, as in the reference numeral 1302, such that a saturation region and halo artifact are reduced and details of the short-exposure image are sufficiently reflected. According to an embodiment, the weight value of the blending map may be controlled during the primary blending 1201 where a pyramid level is high.

Reference numerals 1303 and 1305 of FIG. 13 respectively denote examples of a primary-blended image and a secondary-blended image, and a reference numeral 1304 denotes an example of a long-exposure image including details of a dark region for comparison with a blended image.

In the primary-blended image of the reference numeral 1303, a saturation region and halo artifact may be reduced via blending with the short-exposure image. Also, the secondary-blended image of the reference numeral 1305 may further include details of a dark region included in a reference image, via blending with the long-exposure image.

According to an embodiment, an HDR image to which the details included in each image are sufficiently reflected may be generated while a ghost artifact and halo artifact included in the HDR image are reduced.

An embodiment may also be realized in a form of a recording medium including instructions executable by a computer, such as a program module executed by a computer. A computer-readable recording medium may be an arbitrary available medium accessible by a computer, and examples thereof include all volatile and non-volatile media and separable and non-separable media. Further, examples of the computer-readable recording medium may include a computer storage medium and a communication medium. Examples of the computer storage medium include all volatile and non-volatile media and separable and non-separable media, which have been implemented by an arbitrary method or technology, for storing information such as computer-readable commands, data structures, program modules, and other data. The communication medium typically includes a computer-readable instruction, a data structure, or a program module, and includes an arbitrary information transmission medium.

Furthermore, in the specification, the term "unit" may be a hardware component such as a processor or circuit and/or a software component that is executed by a hardware component such as a processor.

The above description of the present disclosure is provided for illustration, and it will be understood by one of ordinary skill in the art that various changes in form and details may be readily made therein without departing from essential features and the scope of the present disclosure as defined by the following claims. Accordingly, the embodiments described above are examples in all aspects and are not limited. For example, each component described as a single type may be implemented in a distributed manner, and similarly, components described as distributed may be implemented in a combined form.

The scope of the present invention is defined by the appended claims rather than the detailed description, and all changes or modifications within the scope of the appended claims will be construed as being included in the scope of the present invention.

## Claims

1. A computer implemented method of generating a high dynamic range, HDR, image, the method comprising:
obtaining a plurality of images captured in different exposure degrees;
generating at least one transformation matrix indicating regions corresponding between the plurality of images;
determining a movement degree for each of the regions corresponding between the plurality of images, based on the transformation matrix;
generating a blending map indicating a blending ratio of the plurality of images in each pixel, based on the determined movement degree; and
generating the HDR image by blending the plurality of images, based on the blending map,
**characterized in that** the generating of the at least one transformation matrix comprises:
detecting, from the plurality of images, global feature points corresponding to features included in the plurality of images, and matching the global feature points corresponding between the plurality of images;
searching for blocks corresponding between the plurality of images, based on a result of matching the global feature points;
detecting center points of found blocks as local feature points, and matching the local feature points corresponding between the plurality of images; and
generating the at least one transformation matrix, based on results of matching the global feature points and the local feature points.

2. The method of claim 1, wherein, from among the detected local feature points, a local feature point of which a result of matching is inconsistent unlike a result of matching of adjacent local feature points is excluded when generating the transformation matrix.

3. The method of claim 1, wherein the blending map is generated based on a deghosting map determined based on the movement degree and a well-exposed map determined based on intensity of a pixel value.

4. The method of claim 1, wherein a reference image and a plurality of non-reference images are set from among the plurality of images, and
the generating of the HDR image comprises generating the HDR image by blending the plurality of non-reference images stepwise with respect to the reference image, based on the blending map.

5. The method of claim 4, wherein the blending is performed based on features about details of the non-reference images, which are blended with the reference image.

6. The method of claim 5, wherein the blending is performed by determining a number of pyramid levels, which indicates a number of the reference image and non-reference images being decomposed into different resolutions, based on the features about the details of the non-reference images being blended, in a current step, and decomposing the reference image and non-reference images into different resolutions by the determined number of pyramid levels.

7. An electronic device (1000) for generating a high dynamic range, HDR, image, the electronic device (1000) comprising:
a camera (1610) configured to obtain a plurality of images captured in different exposure degrees;
at least one processor (1300) configured to:
generate at least one transformation matrix indicating regions corresponding between the plurality of images;
determine a movement degree for each of the regions corresponding between the plurality of images, based on the transformation matrix;
generate a blending map indicating a blending ratio of the plurality of images in each pixel, based on the determined movement degree; and
generate the HDR image by blending the plurality of images, based on the blending map; and
a memory (1700) storing the generated HDR image,
**characterized in that** the at least one processor (1300) is further configured to:
detect, from the plurality of images, global feature points corresponding to features included in the plurality of images, and matching the global feature points corresponding between the plurality of images;
search for blocks corresponding between the plurality of images, based on a result of matching the global feature points;
detect center points of found blocks as local feature points , and match the local feature points corresponding between the plurality of images; and
generate the at least one transformation matrix, based on results of matching the global feature points and the local feature points.

8. The electronic device of claim 7, wherein, from among the detected local feature points, a local feature point of which a result of matching is inconsistent unlike a result of matching of adjacent local feature points is excluded when the transformation matrix is generated.

9. The electronic device of claim 7, wherein the blending map is generated based on a deghosting map determined based on the movement degree and a well-exposed map determined based on intensity of a pixel value.

10. The electronic device of claim 7, wherein a reference image and a plurality of non-reference images are set from among the plurality of images, and
the at least one processor is further configured to generate the HDR image by blending the plurality of non-reference images stepwise with respect to the reference image, based on the blending map.

11. The electronic device of claim 10, wherein the blending is performed based on features about details of the non-reference images, which are blended with the reference image.

12. The electronic device of claim 11, wherein the blending is performed by determining a number of pyramid levels, which indicates a number of the reference image and non-reference images being decomposed into different resolutions, based on the features about the details of the non-reference images being blended, in a current step, and decomposing the reference image and non-reference images into different resolutions by the determined number of pyramid levels.

13. A computer-readable recording medium having recorded thereon a program for implementing the method of any one of claims 1 to 6.

## Patentansprüche

1. Computerimplementiertes Verfahren zum Erzeugen eines Bildes mit hohem Dynamikumfang, HDR, wobei das Verfahren Folgendes umfasst:
Erlangen einer Vielzahl von Bildern, die in verschiedenen Belichtungsgraden aufgenommen werden;
Erzeugen von mindestens einer Transformationsmatrix, die Bereiche angibt, die unter der Vielzahl von Bildern entsprechen;
Bestimmen eines Bewegungsgrads für jeden der Bereiche, die unter der Vielzahl von Bildern entsprechen, basierend auf der Transformationsmatrix;
Erzeugen einer Vermischungskarte, die ein Vermischungsverhältnis der Vielzahl von Bildern in jedem Pixel angibt, basierend auf dem bestimmten Bewegungsgrad; und
Erzeugen des HDR-Bildes durch Vermischen der Vielzahl von Bildern, basierend auf der Vermischungskarte,
**dadurch gekennzeichnet, dass** das Erzeugen der mindestens einen Transformationsmatrix Folgendes umfasst:
Erkennen, aus der Vielzahl von Bildern, von globalen Merkmalspunkten, die Merkmalen entsprechen, die in der Vielzahl von Bildern enthalten sind, und Abgleichen der globalen Merkmalspunkte, die unter der Vielzahl von Bildern entsprechen;
Suchen nach Blöcken, die unter der Vielzahl von Bildern entsprechen, basierend auf einem Ergebnis des Abgleichens der globalen Merkmalspunkte;
Erkennen von Mittelpunkten von gefundenen Blöcken als lokale Merkmalspunkte und Abgleichen der lokalen Merkmalspunkte, die unter der Vielzahl von Bildern entsprechen; und
Erzeugen der mindestens einen Transformationsmatrix basierend auf Ergebnissen des Abgleichens der globalen Merkmalspunkte und der lokalen Merkmalspunkte.

2. Verfahren nach Anspruch 1, wobei aus den erkannten lokalen Merkmalspunkten ein lokaler Merkmalspunkt, von dem ein Ergebnis des Abgleichens im Gegensatz zu einem Ergebnis des Abgleichens benachbarter lokaler Merkmalspunkte inkonsistent ist, beim Erzeugen der Transformationsmatrix ausgeschlossen wird.

3. Verfahren nach Anspruch 1, wobei die Vermischungskarte basierend auf einer Deghosting-Karte, die basierend auf dem Bewegungsgrad bestimmt wird, und einer gut belichteten Karte, die basierend auf der Intensität eines Pixelwerts bestimmt wird, erzeugt wird.

4. Verfahren nach Anspruch 1, wobei ein Referenzbild und eine Vielzahl von Nicht-Referenzbildern aus der Vielzahl von Bildern gesetzt werden, und
das Erzeugen des HDR-Bildes das Erzeugen des HDR-Bildes durch schrittweises Vermischen der Vielzahl von Nicht-Referenzbildern in Bezug auf das Referenzbild, basierend auf der Vermischungskarte, umfasst.

5. Verfahren nach Anspruch 4, wobei das Vermischen basierend auf Merkmalen über Details der Nicht-Referenzbilder, die mit dem Referenzbild vermischt sind, durchgeführt wird.

6. Verfahren nach Anspruch 5, wobei das Vermischen durchgeführt wird, indem eine Anzahl von Pyramidenniveaus, die eine Anzahl des Referenzbildes und der Nicht-Referenzbilder angibt, die in unterschiedliche Auflösungen zerlegt werden, basierend auf den Merkmalen über die Details der Nicht-Referenzbilder, die vermischt werden, in einem aktuellen Schritt bestimmt wird und das Referenzbild und die Nicht-Referenzbilder in unterschiedliche Auflösungen durch die bestimmte Anzahl von Pyramidenniveaus zerlegt wird.

7. Elektronische Vorrichtung (1000) zum Erzeugen eines Bildes mit hohem Dynamikumfang, HDR, wobei die elektronische Vorrichtung (1000) Folgendes umfasst:
eine Kamera (1610), die dazu konfiguriert ist, eine Vielzahl von Bildern zu erlangen, die in verschiedenen Belichtungsgraden aufgenommen werden;
mindestens einen Prozessor (1300), der konfiguriert ist zum:
Erzeugen von mindestens einer Transformationsmatrix, die Bereiche angibt, die unter der Vielzahl von Bildern entsprechen;
Bestimmen eines Bewegungsgrads für jeden der Bereiche, die unter der Vielzahl von Bildern entsprechen, basierend auf der Transformationsmatrix;
Erzeugen einer Vermischungskarte, die ein Vermischungsverhältnis der Vielzahl von Bildern in jedem Pixel angibt, basierend auf dem bestimmten Bewegungsgrad; und
Erzeugen des HDR-Bildes durch Vermischen der Vielzahl von Bildern, basierend auf der Vermischungskarte; und
einen Speicher (1700), der das erzeugte HDR-Bild speichert, **dadurch gekennzeichnet, dass** der mindestens eine Prozessor (1300) ferner konfiguriert ist zum: Erkennen, aus der Vielzahl von Bildern, von globalen Merkmalspunkten, die Merkmalen entsprechen, die in der Vielzahl von Bildern enthalten sind, und Abgleichen der globalen Merkmalspunkte, die unter der Vielzahl von Bildern entsprechen;
Suchen nach Blöcken, die unter der Vielzahl von Bildern entsprechen, basierend auf einem Ergebnis des Abgleichens der globalen Merkmalspunkte;
Erkennen von Mittelpunkten von gefundenen Blöcken als lokale Merkmalspunkte und Abgleichen der lokalen Merkmalspunkte, die unter der Vielzahl von Bildern entsprechen; und
Erzeugen der mindestens einen Transformationsmatrix basierend auf Ergebnissen des Abgleichens der globalen Merkmalspunkte und der lokalen Merkmalspunkte.

8. Elektronische Vorrichtung nach Anspruch 7, wobei aus den erkannten lokalen Merkmalspunkten ein lokaler Merkmalspunkt, von dem ein Ergebnis des Abgleichens im Gegensatz zu einem Ergebnis des Abgleichens benachbarter lokaler Merkmalspunkte inkonsistent ist, ausgeschlossen wird, wenn die Transformationsmatrix erzeugt wird.

9. Elektronische Vorrichtung nach Anspruch 7, wobei die Vermischungskarte basierend auf einer Deghosting-Karte, die basierend auf dem Bewegungsgrad bestimmt wird, und einer gut belichteten Karte, die basierend auf der Intensität eines Pixelwerts bestimmt wird, erzeugt wird.

10. Elektronische Vorrichtung nach Anspruch 7, wobei ein Referenzbild und eine Vielzahl von Nicht-Referenzbildern aus der Vielzahl von Bildern gesetzt werden, und
der mindestens eine Prozessor ferner dazu konfiguriert ist, das HDR-Bild durch schrittweises Vermischen der Vielzahl von Nicht-Referenzbildern in Bezug auf das Referenzbild, basierend auf der Vermischungskarte, zu erzeugen.

11. Elektronische Vorrichtung nach Anspruch 10, wobei das Vermischen basierend auf Merkmalen über Details der Nicht-Referenzbilder, die mit dem Referenzbild vermischt sind, durchgeführt wird.

12. Elektronische Vorrichtung nach Anspruch 11, wobei das Vermischen durchgeführt wird, indem eine Anzahl von Pyramidenniveaus, die eine Anzahl des Referenzbildes und der Nicht-Referenzbilder angibt, die in unterschiedliche Auflösungen zerlegt werden, basierend auf den Merkmalen über die Details der Nicht-Referenzbilder, die vermischt werden, in einem aktuellen Schritt bestimmt wird und das Referenzbild und die Nicht-Referenzbilder in unterschiedliche Auflösungen durch die bestimmte Anzahl von Pyramidenniveaus zerlegt wird.

13. Computerlesbares Aufzeichnungsmedium mit einem darauf aufgezeichneten Programm zum Implementieren des Verfahrens nach einem der Ansprüche 1 bis 6.

## Revendications

1. Procédé mis en œuvre par ordinateur de génération d'une image à grande gamme dynamique, HDR, le procédé comprenant :
l'obtention d'une pluralité d'images capturées dans différents degrés d'exposition ;
la génération d'au moins une matrice de transformation indiquant des zones correspondant entre la pluralité d'images ;
la détermination d'un degré de mouvement pour chacune des zones correspondant entre la pluralité d'images, sur la base de la matrice de transformation ;
la génération d'une carte de fusion indiquant un rapport de fusion de la pluralité d'images dans chaque pixel, sur la base du degré de mouvement déterminé ; et
la génération de l'image HDR en fusionnant la pluralité d'images, sur la base de la carte de fusion,
**caractérisé en ce que** la génération de l'au moins une matrice de transformation comprend :
la détection, à partir de la pluralité d'images, des points caractéristiques globaux correspondant à des caractéristiques comprises dans la pluralité d'images, et la mise en correspondance des points caractéristiques globaux correspondant entre la pluralité d'images ;
la recherche de blocs correspondant entre la pluralité d'images, sur la base d'un résultat de mise en correspondance des points caractéristiques globaux ;
la détection des points centraux des blocs trouvés en tant que points caractéristiques locaux, et la mise en correspondance des points caractéristiques locaux correspondant entre la pluralité d'images ; et
la génération de l'au moins une matrice de transformation, sur la base des résultats de mise en correspondance des points caractéristiques globaux et des points caractéristiques locaux.

2. Procédé de la revendication 1, parmi les points caractéristiques locaux détectés, un point caractéristique local dont un résultat de correspondance est incohérent contrairement à un résultat de correspondance de points caractéristiques locaux adjacents étant exclu lors de la génération de la matrice de transformation.

3. Procédé de la revendication 1, ladite carte de fusion étant générée sur la base d'une carte de déparasitage déterminée sur la base du degré de mouvement et d'une carte bien exposée déterminée sur la base de l'intensité d'une valeur de pixel.

4. Procédé de la revendication 1, une image de référence et une pluralité d'images de non-référence étant définies parmi la pluralité d'images, et
ladite génération de l'image HDR comprenant la génération de l'image HDR en fusionnant la pluralité d'images de non-référence par étapes par rapport à l'image de référence, sur la base de la carte de fusion.

5. Procédé de la revendication 4, ladite fusion étant réalisée sur la base de caractéristiques concernant des détails des images de non-référence, qui sont fusionnées avec l'image de référence.

6. Procédé de la revendication 5, ladite fusion étant réalisée en déterminant un nombre de niveaux pyramidaux, qui indique un nombre d'images de référence et d'images de non-référence décomposées en différentes résolutions, sur la base des caractéristiques concernant les détails des images de non-référence fusionnées, dans une étape en cours, et en décomposant l'image de référence et les images de non-référence en différentes résolutions par le nombre déterminé de niveaux pyramidaux.

7. Dispositif électronique (1000) destiné à générer une image à grande gamme dynamique, HDR, le dispositif électronique (1000) comprenant :
une caméra (1610) configurée pour obtenir une pluralité d'images capturées dans différents degrés d'exposition ;
au moins un processeur (1300) configuré pour :
générer au moins une matrice de transformation indiquant des zones correspondant entre la pluralité d'images ;
déterminer un degré de mouvement pour chacune des zones correspondant entre la pluralité d'images, sur la base de la matrice de transformation ;
générer une carte de fusion indiquant un rapport de fusion de la pluralité d'images dans chaque pixel, sur la base du degré de mouvement déterminé ; et
générer l'image HDR en fusionnant la pluralité d'images, sur la base de la carte de fusion ; et
une mémoire (1700) stockant l'image HDR générée, **caractérisé en ce que** le au moins un processeur (1300) est en outre configuré pour : détecter, à partir de la pluralité d'images, des points caractéristiques globaux correspondant à des caractéristiques comprises dans la pluralité d'images, et la mise en correspondance des points caractéristiques globaux correspondant entre la pluralité d'images ;
rechercher des blocs correspondant entre la pluralité d'images, sur la base d'un résultat de mise en correspondance des points caractéristiques globaux ;
détecter des points centraux des blocs trouvés en tant que points caractéristiques locaux, et faire correspondre des points caractéristiques locaux correspondant entre la pluralité d'images ; et
générer l'au moins une matrice de transformation, sur la base des résultats de mise en correspondance des points caractéristiques globaux et des points caractéristiques locaux.

8. Dispositif électronique de la revendication 7, parmi les points caractéristiques locaux détectés, un point caractéristique local dont un résultat de correspondance est incohérent contrairement à un résultat de correspondance de points caractéristiques locaux adjacents étant exclu lors de la génération de la matrice de transformation.

9. Dispositif électronique de la revendication 7, ladite carte de fusion étant générée sur la base d'une carte de déparasitage déterminée sur la base du degré de mouvement et d'une carte bien exposée déterminée sur la base de l'intensité d'une valeur de pixel.

10. Dispositif électronique de la revendication 7, une image de référence et une pluralité d'images de non-référence étant définies parmi la pluralité d'images, et
ledit au moins un processeur étant en outre configuré pour générer l'image HDR en fusionnant la pluralité d'images de non-référence par étapes par rapport à l'image de référence, sur la base de la carte de fusion.

11. Dispositif électronique de la revendication 10, ladite fusion étant réalisée sur la base de caractéristiques concernant des détails des images de non-référence, qui sont fusionnées avec l'image de référence.

12. Dispositif électronique de la revendication 11, ladite fusion étant réalisée en déterminant un nombre de niveaux pyramidaux, qui indique un nombre d'images de référence et d'images de non-référence décomposées en différentes résolutions, sur la base des caractéristiques concernant les détails des images de non-référence fusionnées, dans une étape en cours, et en décomposant l'image de référence et les images de non-référence en différentes résolutions par le nombre déterminé de niveaux pyramidaux.

13. Support d'enregistrement lisible par ordinateur sur lequel est enregistré un programme destiné à la mise en œuvre du procédé de l'une quelconque des revendications 1 à 6.
